# EUROPÄISCHE PATENTSCHRIFT

(11) **EP 4 788 938 B1**
(45) Veröffentlichungstag und Bekanntmachung des Hinweises auf die Patenterteilung: **02.12.2026**
(21) Anmeldenummer: 25811961.9
(22) Anmeldetag: 24.11.2025
(51) Int. Cl.: F16C 11/04, F16C 33/20, B60N 2/68

(54) **BAUTEILGRUPPE FÜR EIN FAHRZEUG, INSBESONDERE FÜR EINEN FAHRZEUGSITZ SOWIE VERFAHREN ZUR LACKIERUNG EINER SOLCHEN BAUTEILGRUPPE**
COMPONENT GROUP FOR A VEHICLE, IN PARTICULAR FOR A VEHICLE SEAT, AND METHOD FOR PAINTING A COMPONENT GROUP OF THIS TYPE
GROUPE DE COMPOSANTS DESTINÉ À UN VÉHICULE, EN PARTICULIER À UN SIÈGE DE VÉHICULE, ET PROCÉDÉ DE PEINTURE D'UN GROUPE DE COMPOSANTS DE CE TYPE

(30) Priorität: 28.11.2024 DE 102024211382
(43) Veröffentlichungstag der Anmeldung: 12.08.2026
(73) Patentinhaber: Brose Fahrzeugteile SE & Co. Kommanditgesellschaft, Coburg, 96450 Coburg (DE)
(72) Erfinder: FISCHER, Jürgen, 96450 Coburg (DE); ALEX, Marcus, 96237 Ebersdorf (DE); HERGENRÖDER, Jürgen, 96215 Lichtenfels (DE); GROSSMANN, Oliver, 96484 Meeder (DE)
(74) Vertreter: FDST Patentanwälte
(86) Internationale Anmeldenummer: PCT/EP2025/083988
(87) Internationale Veröffentlichungsnummer: WO 2026/114803

(56) Entgegenhaltungen:
- EP-B1- 3 498 956
- WO-A1-2019/063524
- WO-A1-2025/058968
- DE-A1- 102023 204 113
- KR-B1- 101 474 163

## Beschreibung

Die Erfindung betrifft eine Bauteilgruppe für ein Fahrzeug, insbesondere für einen Fahrzeugsitz, mit einem ersten Bauteil und einem zweiten Bauteil, die aneinander um eine Drehachse drehbar befestigt sind, wobei das erste Bauteil ein Lagerloch aufweist, in dem eine Lagerbuchse einliegt. Die Erfindung betrifft weiterhin ein Verfahren zur Lackierung einer solchen Bauteilgruppe.

Bei der Lackierung von Bauteilen oder Bauteilgruppen wird insbesondere im KfZ-Bereich die sogenannte kathodische Tauchlackierung (KTL) eingesetzt. Bei dieser wird das zu beschichtende Bauteil in ein Tauchbad eingetaucht, in dem geladene Lackpartikel enthalten sind. Das Bauteil wird elektrisch geladen, so dass sich die elektrisch geladenen Lackpartikel am Bauteil anlagern und einen homogenen Lackbezug ausbilden. Um das Bauteil elektrisch aufzuladen muss dieses an ein Spannungspotential elektrisch angeschlossen sein.

Bei der Beschichtung von Bauteilgruppen, bei denen mehrere Bauteile aneinander befestigt sind, muss sichergestellt sein, dass jedes der Bauteile elektrisch geladen ist. Bei Bauteilgruppen, bei denen beispielsweise zwei Bauteile über eine nichtleitende und aus Kunststoff bestehende Lagerbuchse aneinandergelagert sind, müssen beide Bauteile an das elektrische Potential angeschlossen werden.

Für ein effizientes Lackieren werden üblicherweise eine Vielzahl von Bauteilgruppen auf einem gemeinsamen Haltegestell angebracht, welches in das Tauchbad eingetaucht wird und über welches das Spannungspotential für die Bauteilgruppen bereitgestellt wird. Da die Bauteile der Bauteilgruppe separat elektrisch kontaktiert werden müssen, schränkt dies die Anordnungsmöglichkeiten ein und führt zu einem hohen Platzbedarf, sodass die Anzahl der Bauteilgruppen pro Haltegestell begrenzt ist.

Die kathodische Tauchlackierung ist beispielsweise aus der EP 3 891 323 B1 bekannt, bei der ein Stromfluss zwischen zwei aneinandergelagerten Bauteilen über eine elektrisch leitende Kontaktscheibe erreicht wird.

Aus der EP 3 498 956 B1 ist ein Scharnier zu entnehmen, bei dem zwei Scharnierteile über eine Buchse aus Kunststoff drehbar aneinandergelagert sind. Zwischen einem Lagerbolzen und der Buchse ist ein leitendes Element zur elektrischen Überbrückung der nicht leitfähigen Buchse angebracht. Hierzu ist die Buchse zweiteilig ausgebildet und das leitende Element ist als Ring in einen Zwischenraum zwischen den beiden Teilen eingelegt. In diesem Dokument wird zum Stand der Technik auch beschrieben, dass es bei der Verwendung von Kunststoffbuchsen bei der kathodischen Tauchlackierung zu einer hohen Anzahl von Lackierungs-Fehlstellen kommen kann aufgrund einer unzureichenden elektrischen Leitfähigkeit zwischen den Bauteilen und den daraus eventuell resultierenden Lichtbögen. Bei Verwendung von elektrisch leitfähigen Kunststoffbuchsen wird als Problem eine starke Lackanhaftung im Außenbereich des Scharniers beschrieben, die sich lösen kann.

KR 101 474 163 B1 beschreibt eine Lagerstelle, bei der eine Kunststoffbuchse eingesetzt wird, die leitfähige Kohlenstoffteilchen aufweist.

Aus DE 10 2023 204113 A1 ist eine Lageranordnung für eine Fahrzeugsitz zu entnehmen, bei der eine Lagerbuchse an ein Lagerbauteil angegossen ist.

WO 2019/063524 A1 beschreibt ein beschichtetes Scharnier mit einem elektrisch leitfähigen Lager, wobei die elektrische Leitfähigkeit zwischen dem Lager und einem der anderen Bauteile des Scharniers durch einen gekerbten Bereich im Lager ermöglicht wird. Dies kann zu einer besseren Abdeckung der Beschichtung führen.

Aus der nachveröffentlichten WO 2025/058968 A1 ist eine Lagerstelle zu entnehmen, bei der eine leitfähige Buchse eingesetzt wird und eine leitfähige Verbindung der Bauteile der Lagerstelle auszubilden, wobei die Lagerstelle anschließend mit Hilfe eines elektrostatischen Lackierverfahrens lackiert wird.

Ausgehend hiervon liegt der Erfindung die Aufgabe zugrunde, eine Bauteilgruppe sowie ein Verfahren zur Lackierung einer derartigen Bauteilgruppe anzugeben, wobei eine zuverlässige homogene Lackierung erreicht wird und eine kompakte Anordnung auf einem Haltegestell für eine effiziente Tauchbad-Lackierung ermöglicht ist.

Die Aufgabe wird gemäß Erfindung gelöst durch eine Bauteilgruppe für ein Fahrzeug, insbesondere für einen Fahrzeugsitz, mit einem ersten Bauteil und einem zweiten Bauteil, die aneinander um eine sich in einer Axialrichtung erstreckenden Drehachse drehbar befestigt sind, wobei das erste Bauteil ein Lagerloch aufweist, in dem eine Lagerbuchse eingegossen ist, welche durch teilweises Umgießen des ersten Bauteils ausgebildet ist. Die beiden Bauteile sind über einen durch die Lagerbuchse geführten Lagerbolzen miteinander verbunden, wobei die Lagerbuchse aus Kunststoff mit darin enthaltenen leitfähigen Beimengungen ausgebildet ist. Die Lagerbuchse weist also eine Kunststoffmatrix mit darin eingebetteten leitfähigen Beimengungen auf. Über die Lagerbuchse und den Lagerbolzen ist eine leitfähige Verbindung zwischen den beiden Bauteilen ausgebildet. Auf die Bauteilgruppe ist eine Lackschicht mittels einer kathodischen Tauchlackierung angebracht.

Die beiden Bauteile sowie der Lagerbolzen sind elektrisch leitend und bestehen üblicherweise aus einem metallischen Werkstoff.

Die beiden Bauteile schließen sich in der Axialrichtung aneinander an und der Lagerbolzen weist üblicherweise beidseitig einen Schließkopf auf, über den die beiden Bauteile in Axialrichtung formschlüssig gesichert sind.

Die Dicke der Lackschicht liegt typischerweise im Bereich zwischen 10µm bis 35µm und insbesondere im Bereich zwischen 15µm bis 20µm.

Unter einer gegossenen Lagerbuchse wird vorliegend verstanden, dass diese durch einen beispielsweise drucklosen Gießprozess oder einen druckbehafteten Spritzgießprozess ausgebildet ist, bei der das erste Bauteil in eine entsprechende Gussform eingelegt wird, in die dann zur Ausbildung der gegossenen Lagerbuchse das mit den leitfähigen Beimengungen versehene Kunststoffmaterial eingebracht wird. Durch die gegossene Kunststoffbuchse wird der besondere Vorteil erzielt, dass diese sich unmittelbar an das Lagerloch anschließt, sodass ein inniger Kontakt beispielsweise mit einem Lochrand des Lagerlochs erreicht wird.

Bei derartigen Bauteilgruppen besteht allgemein das Problem, dass aufgrund der Aneinanderreihung von einer Vielzahl von Bauteilen ein jedes der Bauteile mit einer gewissen Herstellungs- oder Montagetoleranz bereitgestellt werden muss, was insgesamt zu einer Toleranzkette führt, die zu einer toleranzbehafteten Bauteilverbindung führt. Durch das Umgießen des ersten Bauteils wird zumindest ein Toleranzeffekt zwischen den Lagerloch und der Lagerbuchse ausgeglichen.

Untersuchungen haben gezeigt, dass durch die Verwendung einer mit leitfähigen Beimengungen versehenen Kunststoffbuchse, die gegossen ist, speziell aufgrund des unmittelbaren und direkten Kontakts der gegossenen Lagerbuchse mit dem ersten Bauteil, eine gute elektrisch leitfähige Verbindung der beiden Bauteile über die Kunststoffbuchse erfolgt. Diese elektrisch leitende Verbindung erfolgt vom ersten Bauteil über die Kunststoffbuchse zunächst in den Lagerbolzen, welcher sich an der Kunststoffbuchse abstützt und welcher schließlich mit dem zweiten Bauteil verbunden ist.

Eine derartige vorbereitete Bauteilgruppe hat sich als besonders geeignet für die kathodische Tauchlackierung herausgestellt und bei dem erfindungsgemäßen Verfahren wird eine solche unlackierte Bauteilgruppe in das Tauchbad eingesetzt. Mit der grundsätzlich an sich bekannten kathodischen Tauchlackierung wird die Lackierung aufgebracht. Es wird ein homogener Lackbezug mit hoher Qualität ausgebildet. Aufgrund der leitfähigen Verbindung zwischen den beiden zu beschichtenden Bauteilen reicht es dabei aus, dass lediglich eines der Bauteile am Haltegestell mit einem elektrischen Spannungspotential verbunden werden muss. Dies erfolgt üblicherweise durch eine geeignete Aufhängung des Bauteils am Haltegestell, sodass über die Aufhängung an einem Aufhängungspunkt die elektrische Kontaktierung und Verbindung mit dem Spannungspotential über das Haltegestell erfolgt.

In bevorzugter Ausbildung weist die Lagerbuchse zumindest einen sich radial erstreckenden Buchsenrand auf, mit dem die Lagerbuchse einen Lochrand des Lagerlochs umgreift. Weiterhin weist der Lagerbolzen einen Kragen auf, mit dem er auf dem Buchsenrand aufliegt. Der Buchsenrand ist nach Art eines insbesondere umlaufenden Flansches ausgebildet. Über den Kragen wird eine in Axialrichtung formschlüssige Sicherung erreicht. Der Kragen bildet einen Schließkopf aus, wie er zuvor bereits erläutert wurde. Der Buchsenrand liegt daher zwischen dem Kragen und dem ersten Bauteil ein und ist insbesondere zwischen diesen beiden Teilen eingeklemmt und eingespannt. Hierdurch wird ein besonders inniger Kontakt zwischen dem Lagerbolzen, der Lagerbuchse und dem ersten Bauteil erzielt, was die angestrebte elektrisch leitfähige Verbindung zwischen dem ersten Bauteil und dem Lagerbolzen positiv beeinflusst. Durch das Umgießen liegt grundsätzlich der Buchsenrand auch unmittelbar am Lochrand des Lagerloches an.

In zweckdienlicher Weiterbildung weist die Lagerbuchse zwei in Axialrichtung gegenüberliegende, sich radial erstreckende Buchsenränder auf, die den Lochrand in Axialrichtung beidseitig umgreifen. Die Lagerbuchse ist daher im Lagerloch beidseitig in axialer Richtung formschlüssig und insbesondere spielfrei fixiert.

Insbesondere liegt das zweite Bauteil an einem der beiden Buchsenkragen unmittelbar an. Weiterhin ist bevorzugt der Lagerbolzen über einen zweiten Schließkopf vorzugsweise unmittelbar mit dem zweiten Bauteil verbunden. Der Lagerbolzen ist allgemein beispielsweise als Schraubbolzen oder als Nietbolzen ausgebildet. Hierbei sind die beiden Schließköpfe durch einen Bolzenkopf auf der einen Seite und auf der anderen Seite durch eine Mutter / eine Mutter-ähnliche Verbindung (im Falle des Schraubbolzens) oder einen umgeformten Nietkopf (im Falle eines Nietbolzens) ausgebildet. Der zuvor beschriebene Kragen des Lagerbolzens ist insbesondere durch den Bolzenkopf oder alternativ durch die Mutter oder den umgeformten Kopf gebildet.

Die beiden Bauteile sind üblicherweise über eine definierte Vorspannung, welche über den Lagerbolzen mit den axial beidseitigen Schließköpfen aufgebracht wird, gegeneinander verspannt, wodurch die elektrisch leitfähige Verbindung zwischen den einzelnen Teilen zuverlässig gewährleistet ist.

**In** bevorzugter Ausgestaltung sind an dem zumindest einen Buchsenrand Erhebungen ausgebildet gegen die der Kragen des Lagerbolzens gepresst ist. Die Erhebungen sind dabei insbesondere noppenartig ausgebildet und/oder über den Umfang des Buchsenrandes gleichmäßig verteilt angeordnet. Durch diese Erhebungen wird im Bereich einer jeweiligen Erhebung eine Anpresskraft zum Kragen hin erhöht, es werden quasi eine Vielzahl von Punktkontakten ausgebildet. Durch diese Maßnahme wird die Leitfähigkeit zwischen den beiden Teilen verbessert.

Beim Gießprozess bildet sich üblicherweise eine Gießhaut aus, in der typischerweise lediglich isolierendes Kunststoffmaterial vorliegt und nicht die elektrisch leitfähigen Beimengungen. Durch das Gießen wird daher als besonderer Effekt der gegossenen Lagerbuchse die elektrische Leitfähigkeit zumindest gemindert, so dass sich ein Übergangswiderstand zum Lagerbolzen hin erhöht. Speziell durch die zuvor beschriebenen Erhebungen und allgemein durch den innigen Kontakt zwischen dem Lagerbolzen und der Lagerbuchse, insbesondere zwischen dem Kragen und dem Buchsenrand wird eine ausreichende Leitfähigkeit trotz dieser Gießhaut erreicht. Speziell durch die Erhebungen wird der elektrische Übergangswiderstand zwischen dem Lagerbolzen und der Lagerbuchse reduziert.

Die Gießhaut liegt zumindest in den Bereichen vor, in denen kein Kontakt mit dem Lagerbolzen vorliegt. Wie bereits erwähnt, bildet diese Gießhaut eine elektrische isolierende Schicht, die den Übergangswiderstand erhöht, bzw. die elektrisch isolierend wirkt. **In** freien Oberflächenbereichen der Lagerbuchse, die also beim Lackieren mit der Flüssigkeit des Tauchbads in Kontakt kommen liegt daher diese isolierende Gießhaut vor.

Die zunächst unlackierte Bauteilgruppe wird, wie bereits erwähnt, durch Eintauchen der gesamten Bauteilgruppe in das Tauchbad für die kathodische Tauchlackierung lackiert. Nach dem Lackiervorgang ist die Bauteilgruppe daher lackiert, wobei in bevorzugter Ausgestaltung die Lagerbuchse frei von Lack ist. Trotz ihrer Leitfähigkeit, die dazu beiträgt, dass beide Bauteile beim Lackieren elektrisch geladen sind, ist die Lagerbuchse selbst, zumindest die freien Oberflächenbereiche nicht bzw. nicht ausreichend elektrisch geladen, sodass sich dort an den freien Oberflächenbereichen der Lagerbuchse, an denen die Flüssigkeit des Tauchbads gelangen kann, die geladenen Lackteilchen sich nicht anlagern. Dies ist insbesondere auch durch die beschriebene Gießhaut erreicht, die elektrisch isolierend wirkt. Im lackierten Zustand weisen daher lediglich die metallischen Bestandteile der Bauteilgruppe, also das erste Bauteil, das zweite Bauteil, sowie der Lagerbolzen wie gewünscht eine Lackschicht auf, gleichzeitig ist jedoch die Kunststoff-Lagerbuchse frei von Lack. Hierdurch ist ausgeschlossen, dass im Laufe der Betriebsdauer Lackteile von der Lagerbuchse abplatzen.

In bevorzugter Ausgestaltung weist das erste Bauteil weiterhin ein weiteres, zweites Lagerloch auf, in dem eine weitere, zweite gegossene Lagerbuchse durch teilweises Umgießen des ersten Bauteils ausgebildet ist. Auch diese weitere Lagerbuchse ist aus Kunststoff mit darin enthaltenen leitfähigen Beimengungen ausgebildet. Bevorzugt bestehen die beiden Lagerbuchsen aus dem gleichen Material und weiter bevorzugt sind die beiden Lagerbuchsen aus dem identischen Material ausgebildet.

In zweckdienlicher Weiterbildung ist die weitere Lagerbuchse frei von Lack.

Bei der weiteren Lagerbuchse handelt es sich insbesondere um eine freie Lagerbuchse, an der also zunächst kein weiteres Bauteil gelagert ist. Erst bei der späteren Montage nach der Tauchlackierung erfolgt über die zweite Lagerbuchse die Befestigung eines weiteren (dritten) Bauteils, welches schwenkbeweglich am ersten Bauteil befestigbar ist.

Als elektrisch leitfähige Beimengungen werden beispielsweise Rußpartikel, Grafitpartikel, und/oder Metallpartikel beispielsweise jeweils in Pulverform verwendet. Darüber hinaus können auch Kohlenstofffasern, Metallfasern oder sogenannte Carbon Nanotubes eingesetzt werden.

In bevorzugter Ausgestaltung handelt es sich bei den Beimengungen um leitfähige Fasern und vorzugsweise um Kohlefasern. Unter Fasern werden hier allgemein langgestreckte Elemente verstanden, deren Verhältnis von Länge zu Durchmesser zumindest fünf, vorzugsweise zumindest zehn beträgt. Bevorzugt weisen die Fasern beispielsweise eine Länge im Bereich von 0,15 mm bis 1,5 mm bei einem Durchmesser von vorzugsweise von 0,08 bis 0,15 auf.

Ein besonderer Vorteil der Fasern ist darin zu sehen, dass sie sich wechselseitig kreuzen, da ihre Orientierung innerhalb der Kunststoffmatrix zumindest in Teilbereichen typischerweise zufällig verteilt ist. Eine jeweilige Faser kann dabei mehrere andere Fasern berühren. Insgesamt ist hierdurch eine Art Fasernetz ausgebildet. Insgesamt trägt dies zur gewünschten Leitfähigkeit besonders bei.

Der Anteil der Beimengungen, also speziell der Fasern liegt bevorzugt im Bereich zwischen 10 Vol.-% und 60 Vol.-%, insbesondere im Bereich zwischen 10 Vol.-% und 40 Vol.-%.

Der restliche Anteil des Materials der Lagerbuchse ist vorzugsweise ausschließlich durch die Kunststoffmatrix gegeben. Als Beimengungen werden vorzugsweise ausschließlich Fasern eingesetzt, wie sie zuvor beschrieben wurden.

In bevorzugter Ausgestaltung ist die Lagerbuchse ausreichend Temperaturbeständig und beispielsweise bis zumindest 150°C und insbesondere bis 180°C oder darüber hinaus temperaturbeständig. Aufgrund neuerer Entwicklungen, bei denen geringe Prozesstemperaturen angestrebt werden, ist es vorzugsweise weiterhin ausreichend, wenn die Lagerbuchse bis maximal 210°C oder bis maximal 180°C temperaturbeständig ist. Unter tempertaturbeständig wird insbesondere verstanden, dass die Lagerbuchse eine derartige Temperatur für einen vorgegebenen Zeitraum von beispielsweise einer Stunde oder zumindest über die Dauer des KTL Prozesses standhält, ohne dass der Kunststoff beschädigt wird und sich beispielsweise formverändernd erweicht und/oder zersetzt.

Durch die Temperaturbeständigkeit wird insbesondere sichergestellt, dass die Lagerbuchse den thermischen Belastungen beim Lackieren standhält. Diese thermischen Belastungen werden bestimmt zum einen durch die Temperatur des Tauchbads und darüber hinaus insbesondere auch durch die sich an das Tauchbad anschließende Trocknung. Insgesamt erreicht die Temperaturbelastung beispielsweise bis zu 180°C.

Als Material für die Lagerbuchse wird insbesondere **PBT** (Polybutylenterephthalat) oder Polyamid, beispielsweise PA6 oder PA66 eingesetzt. Die Kunststoffmatrix besteht daher insbesondere vollständig aus (genau) einem dieser Materialien. Alternativ kann für die Kunststoffmatrix auch ein Mischcompound eingesetzt werden.

Bei der hier beschriebenen Bauteilgruppe handelt es sich insbesondere um eine Bauteilgruppe für einen Fahrzeugsitz eines Kraftfahrzeuges, insbesondere eines PKWs. Insbesondere handelt es sich bei dem ersten Bauteil um einen Schwenkhebel und einem zweiten Bauteil um ein Seitenteil eines Sitzträger.

Die Bauteilgruppe bildet insgesamt im montierten Zustand Teil einer Verstellmechanik für den Fahrzeugsitz, beispielsweise für eine Höhenverstellung. Über das zuvor beschriebene zweite Lagerloch mit der darin angeordneten zweiten Lagerbuchse erfolgt eine zusätzliche Schwenkbarbefestigung an einem dritten Bauteil, welches beispielsweise an einem Sitzuntergestell befestigt ist. Der Schwenkhebel mit den beiden Lagerlöchern ist im endmontierten Zustand beispielsweise Teil einer Vier-Gelenk-Kinematik, die beispielsweise für eine Höhenverstellung des Fahrzeugsitzes herangezogen wird.

Ein Ausführungsbeispiel der Erfindung wird nachfolgend anhand der Figuren näher erläutert. Diese zeigen in teilweise vereinfachten Darstellungen:
- FIG 1: eine Bauteilgruppe mit einem Schwenkhebel als erstem Bauteil, welches an einem Sitzträger eines Fahrzeugsitzes als zweites Bauteil schwenkbar befestigt ist,
- FIG 2: eine Schnittdarstellung durch die Bauteilgruppe entlang des Schwenkhebels,
- FIG 3: eine perspektivische Ansicht auf eine Vorderseite des Schwenkhebels, sowie
- FIG 4: eine perspektivische Ansicht auf einer Rückseite des Schwenkhebels.

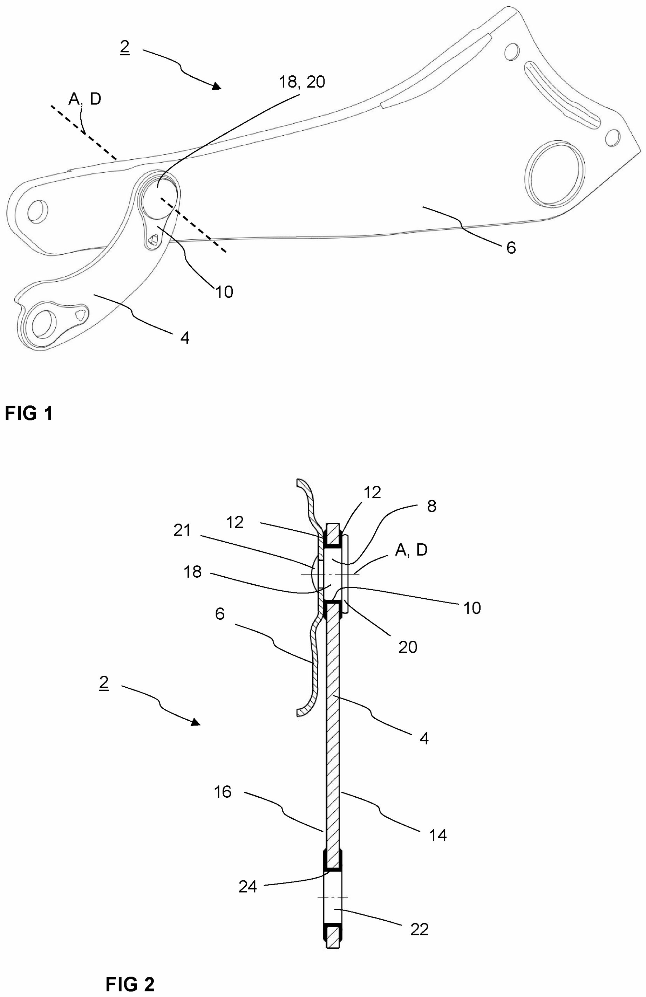

Eine in FIG 1 dargestellte Bauteilgruppe 2 umfasst einen Schwenkhebel, welcher ein erstes Bauteil 4 bildet und welcher drehbar an einem zweiten Bauteil 6 angebracht ist, bei dem es sich insbesondere um ein Seitenteil eines Sitzträgers eines hier nicht näher dargestellten Fahrzeugsitzes handelt. Bei der dargestellten Bauteilgruppe 2 handelt es sich um eine vorgefertigte, zunächst unlackierte Bauteilgruppe 2, die als solche lackiert wird. Hierzu wird die zunächst unlackierte Bauteilgruppe 2 in ein hier nicht näher dargestelltes Tauchbad für eine kathodische Tauchbadlackierung eingetaucht. Hierbei werden eine Vielzahl derartiger Bauteilgruppen 2 gemeinsam an ein Haltegestell angebracht, wobei über das Haltegestell eine elektrisch leitende Verbindung zu einer jeweiligen Bauteilgruppe 2 ausgebildet wird. Hervorzuheben ist, dass aufgrund der nachfolgend noch beschriebenen elektrisch leitfähigen Verbindung zwischen den beiden Bauteilen 4, 6 lediglich eines dieser Bauteile 4,6 leitend mit dem Haltegestell verbunden ist, wodurch insgesamt eine kompakte platzsparende Anordnung einer Vielzahl von Bauteilgruppen 2 an dem Haltegestell ermöglicht ist, sodass eine hohe Anzahl von Bauteilgruppen 2 gleichzeitig bei geringem Platzbedarf lackiert werden können.

Um dies zu ermöglichen ist erforderlich, dass auch das weitere Bauteil 4, 6, welches nicht mit dem Haltegestell elektrisch leitend verbunden ist, auf einem ausreichenden Spannungspotential gehalten ist, sodass sich die im Tauchbad enthaltenen geladenen Lackteilchen zuverlässig auch an diesem weiteren Bauteil 4, 6 zuverlässig ablagern. Allgemein wird über das Haltegestell und dem zumindest einen Kontaktpunkt mit dem zumindest einen Bauteil 4, 6 die Bauteilgruppe 2 auf ein erforderliche Spannungspotential gebracht.

Wie insbesondere auch in Verbindung mit FIG 2 ersichtlich ist, sind die beiden Bauteile 4, 6 um eine Drehachse D schwenkbar aneinandergelagert, die sich in einer Axialrichtung A erstreckt. Bei den beiden Bauteilen 4, 6 handelt es sich insbesondere um Blechteile, speziell Blechbiegeteile. Der Schwenkhebel (erstes Bauteil 4) ist im Ausführungsbeispiel langgestreckt ausgebildet und insbesondere als ein gekrümmtes Bauteil.

Für die schwenkbewegliche Befestigung der beiden Bauteile 4 aneinander weist das erste Bauteil 4 ein Lagerloch 8 auf, welches nachfolgend auch als erstes Lagerloch 8 bezeichnet wird. Das erste Lagerloch 8 nimmt eine Lagerbuchse 10 auf, die nachfolgend auch als erste Lagerbuchse 10 bezeichnet wird.

Die erste Lagerbuchse 10 ist durch einen Gussprozess ausgebildet und unmittelbar an das erste Bauteil 4 angegossen. Sie besteht aus Kunststoff mit darin eingebrachten leitfähigen Beimengungen, insbesondere leitfähigen Fasern, beispielsweise Kohlefasern. Hierdurch weist sie eine gewisse elektrische Leitfähigkeit auf. Die erste Lagerbuchse 10 weist an beiden gegenüberliegenden Seiten des ersten Bauteils 8 jeweils einen Buchsenrand 12 auf, welcher sich radial, also senkrecht zur Axialrichtung A erstreckt und jeweils einen Lochrand des ersten Lagerlochs 8 umgreift, also einerseits an einer Vorderseite 14 als auch an einer Rückseite 16 des ersten Bauteils 4. Die beiden Buchsenränder 12 sind über ein gegossenes und insbesondere zylindrisches Buchsen-Zwischenstück miteinander verbunden. Wie insbesondere anhand der Querschnittsdarstellung der **FIG** 2 zu erkennen ist, wird ein jeweiliger Lochrand etwa U-förmig von der ersten Lagerbuchse 10 umgriffen. Bei der ersten Lagerbuchse 10 an sich allgemein um ein monolithisches, gegossenes Bauteil.

Das erste Bauteil 4 liegt mit seiner Rückseite 16 insbesondere flächig an einem vorzugsweise flächigen Wandungsbereich des zweiten Bauteils 6 an. Insbesondere liegt hierbei der an der Rückseite 16 ausgebildete Buchsenrand 12 zwischen den beiden Bauteilen 4, 6 sandwichartig ein und bildet insbesondere eine Gleitfläche aus.

Die Verbindung zwischen den beiden Bauteilen 4, 6 erfolgt mithilfe eines Lagerbolzens 18 welcher durch die erste Lagerbuchse 8 hindurchgesteckt ist und einen Kragen 20 aufweist, welcher durch einen verbreiterten Bolzenkopf gebildet ist und damit einen Schließkopf ausbildet. Der Kragen 20 liegt auf dem einen der beiden Buchsenränder 12 auf. Auf der gegenüberliegenden Seite weist der Lagerbolzen 18 einen weiteren Schließkopf 21 auf, der beispielsweise bei einem Schraubbolzen durch eine Mutter und im Ausführungsbeispiel durch einen durch Umformen hergestellten Nietkopf ausgebildet ist. Im Ausführungsbeispiel ist der Lagerbolzen 18 daher als ein Nietbolzen ausgebildet. Die beiden Bauteile 4, 6 sind über den Lagerbolzen 18 und den beiden Schließköpfen, also dem Kragen 20 und dem weiteren Schließkopf 21, formschlüssig aneinandergehalten. Insbesondere sind sie mit einer definierten Vorspannung gegeneinander unter Zwischenschaltung der Lagerbuchse 10 verspannt. Wie insbesondere anhand der FIG 2 zu erkennen ist, liegt der weitere Schließkopf 21 unmittelbar am zweiten Bauteil 6 an, ist daher unmittelbar gegen dieses zweite Bauteil 6 verspannt.

Insgesamt ist durch die erste Lagerbuchse 10 eine elektrisch leitfähige Verbindung zwischen den beiden Bauteilen 4, 6 ausgebildet. Maßgebend hierfür sind die in die Kunststoffmatrix der ersten Lagerbuchse 10 eingebrachten leitfähigen Beimengungen. Wesentlich ist weiterhin, dass es sich bei der ersten Lagerbuchse 10 um ein gegossenes Bauteil handelt, sodass ein inniger und unmittelbarer Kontakt zum ersten Bauteil 4 hergestellt ist. Durch das Verspannen über den Lagerbolzen 18 und das Anpressen des Kragens 20 sowie des zweiten Bauteils 6 jeweils gegen einen der Buchsenränder 12 ist ein inniger Kontakt einerseits zum Lagerbolzen 18 als auch zum zweiten Bauteil 6 ausgebildet.

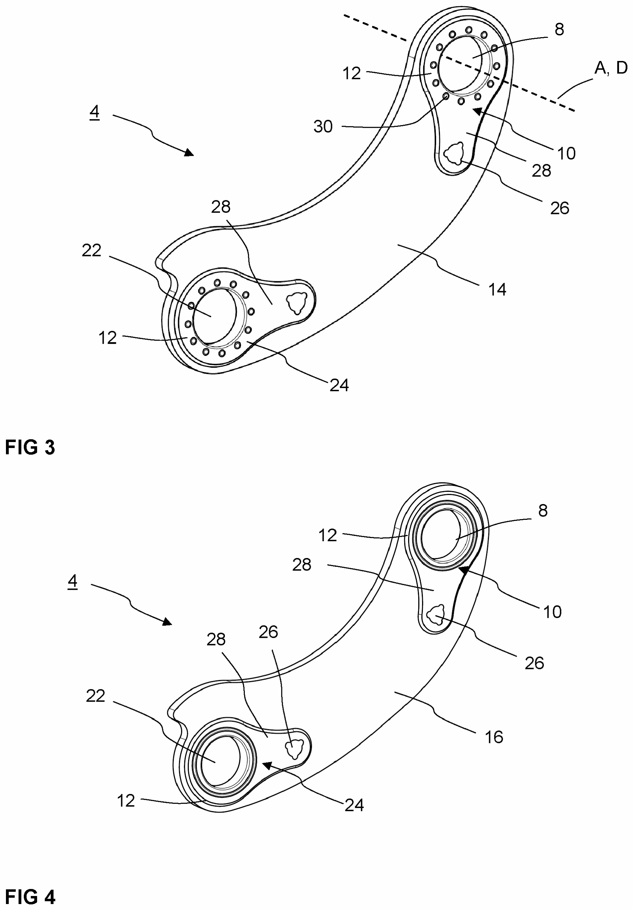

Wie speziell anhand FIG 3 weiterhin zu erkennen ist, weist der Buchsenrand 12 zumindest an einer Seite, beispielswiese lediglich an einer Seite oder alternativ sowohl an der Vorderseite 14 als auch an der Rückseite 16 Erhebungen 30 auf. Diese sind im Ausführungsbeispiel nach Art von einzelnen Noppen ausgebildet, die um das erste Lagerloch 8 herum insbesondere gleichverteilt angebracht sind. Beispielsweise sind zumindest sechs einzelne Erhebungen 30 und weiter vorzugsweise zwischen fünf und zwanzig Erhebungen 30 angebracht. Durch diese Erhebungen 30 wird jeweils ein punktförmiger Kontakt mit dem Kragen 20 ausgebildet, so dass dadurch eine höhere (Flächen) Pressung vorliegt. Durch diese erhöhte Presskraft ist speziell an diesen Erhebungen 30 ein Übergangswiderstand zwischen dem metallischen Kragen 20 und der leitfähigen Kunststoffbuchse erhöht. Dies trägt entscheidend auch für die leitfähige Verbindung zwischen den beiden Bauteilen 4, 6 bei.

Wie anhand der FIG 1 sowie der FIG 3 und FIG 4 zu erkennen ist, weist das erste Bauteil 4 ein weiteres Lagerloch 22 auf, welches nachfolgend als zweites Lagerloch bezeichnet wird. In diesem ist eine weitere, zweite Lagerbuchse 24 angebracht, die vorzugsweise identisch zu der ersten Lagerbuchse 10 ausgebildet ist. Über diese ist daher eine zweite Lagerstelle ausgebildet, an die ein hier nicht näher dargestelltes drittes Bauteil schwenkbeweglich angebracht werden kann. Beispielsweise handelt es sich bei dem dritten Bauteil um ein Sitzuntergestell des Fahrzeugsitzes, sodass also der Sitzträger (zweites Bauteil 6) über das erste Bauteil 4 (Schwenkhebel) am Sitzuntergestell beispielsweise für eine Höhenverstellung schwenkbeweglich angebracht ist.

Im Ausführungsbeispiel ist dem ersten Lagerloch 8 vorzugsweise ein weiteres, Durchgangsloch 26 im ersten Bauteil 4 zugeordnet, welches neben dem ersten Lagerloch 8 ausgebildet ist und welches im Ausführungsbeispiel kleiner als das erste Lagerloch 8 ist. Das Durchgangsloch 26 ist insbesondere unrund ausgebildet. Die erste Lagerbuchse 10 durchdringt vorzugsweise auch dieses Durchgangsloch. Der jeweilige Buchsenrand 12 bildet jeweils vorzugsweise auf beiden Seiten 14, 16 eine sich radial in Richtung zu dem Durchgangsloch 26 erstreckende Buchsenlasche 28 aus. Im Durchgangsloch 26 ist wiederum ein hohles Buchsen-Zwischenstück angebracht.

Bevorzugt ist auch dem zweiten Lagerloch 22 ein solches Durchgangsloch 26 zugeordnet und die zweite Lagerbuchse 24 ist analog und insbesondere identisch zu der ersten Lagerbuchse 10 mit den Buchsenlaschen 28 ausgebildet.

Die hier beschriebene Bauteilgruppe 2 mit den beiden über die leitfähige Lagerbuchse 10 verbundenen Bauteile 4, 6 handelt es sich allgemein um eine Bauteilgruppe speziell für einen Fahrzeugsitz. Beispielsweise wird die Lagerbuchse 10 an ein Rohr-/Bauteil für eine Sitzhöhenverstellung, an ein Bauteil für eine Neigungsverstellung des Sitzes, an einem Bauteil für eine Beinauflage oder Fußauflage oder an sonstigen schwenkbeweglichen Bauteilanordnungen angebracht.

### Bezugszeichenliste

- 2: Bauteilgruppe
- 4: erstes Bauteil
- 6: zweites Bauteil
- 8: erstes Lagerloch
- 10: erste Lagerbuchse
- 12: Buchsenrand
- 14: Vorderseite
- 16: Rückseite
- 18: Lagerbolzen
- 20: Kragen
- 21: Schließkopf
- 22: zweites Lagerloch
- 24: zweite Lagerbuchse
- 26: Durchgangsloch
- 28: Buchsenlasche
- 30: Erhebung

- D: Drehachse
- A: Axialrichtung

## Patentansprüche

1. Bauteilgruppe (2) für ein Fahrzeug, insbesondere für einen Fahrzeugsitz, mit einem ersten Bauteil (4) und einem zweiten Bauteil (6), die aneinander um eine sich in einer Axialrichtung (A) erstreckenden-Drehachse (D) drehbar befestigt sind, wobei das erste Bauteil (4) ein Lagerloch (8) aufweist, in dem eine Lagerbuchse (10) eingegossen ist, welche durch teilweises Umgießen des ersten Bauteils (4) ausgebildet ist, und die beiden Bauteile (4, 6) über einen durch die Lagerbuchse (10) geführten Lagerbolzen (18) verbunden sind, wobei die Lagerbuchse (10) aus Kunststoff mit darin enthaltenen leitfähigen Beimengungen ausgebildet ist, derart, dass über die Lagerbuchse (10) und den darin geführten Lagerbolzen (18) eine leitfähige Verbindung zwischen den beiden Bauteilen (4, 6) ausgebildet ist und wobei auf die Bauteilgruppe (2) eine Lackschicht mittels einer kathodischen Tauchlackierung angebracht ist.

2. Bauteilgruppe (2) nach dem vorhergehenden Anspruch, wobei die Lagerbuchse (10) zumindest einen sich radial erstreckenden Buchsenrand (12) aufweist, mit dem die Lagerbuchse (10) einen Lochrand des Lagerlochs (8) umgreift und wobei der Lagerbolzen (18) einen Kragen (20) aufweist, mit dem er auf dem Buchsenrand (12) aufliegt.

3. Bauteilgruppe (2) nach einem der vorhergehenden Ansprüche, wobei die Lagerbuchse (10) den Lochrand in Axialrichtung (A) beidseitig mit einem sich radial erstreckenden Buchsenrand (12) umgreift.

4. Bauteilgruppe (2) nach einem der vorhergehenden Ansprüche, wobei am Buchsenrand (12) insbesondere noppenartige Erhebungen (30) ausgebildet sind, gegen die der Kragen (20) gepresst ist.

5. Bauteilgruppe (2) nach einem der vorhergehenden Ansprüche, bei dem die Lagerbuchse (10) eine Gießhaut zumindest in Bereichen aufweist, in denen kein Kontakt mit dem Lagerbolzen (18) vorliegt.

6. Bauteilgruppe (2) nach einem der vorhergehenden Ansprüche, die lackiert ist, wobei die Lagerbuchse (10) frei von Lack ist.

7. Bauteilgruppe (2) nach einem der vorhergehenden Ansprüche, wobei das erste Bauteil (4) ein weiteres Lagerloch (22) aufweist, in der eine weitere gegossene Lagerbuchse (10) durch teilweises Umgießen des ersten Bauteils (4) ausgebildet ist, wobei auch die weitere Lagerbuchse (10) aus Kunststoff mit darin enthaltenen leitfähigen Beimengungen ausgebildet ist, wobei die weitere Lagerbuchse (10) vorzugsweise frei von Lack ist.

8. Bauteilgruppe (2) nach einem der vorhergehenden Ansprüche, wobei es sich bei den Beimengungen um leitfähige Fasern, insbesondere Kohlefasern handelt.

9. Bauteilgruppe (2) nach einem der vorhergehenden Ansprüche, wobei der Anteil der Beimengungen im Bereich zwischen 10 Vol.-% und 60 Vol.-% und insbesondere im Bereich zwischen 10 Vol.-% und 40 Vol-%.

10. Bauteilgruppe (2) nach einem der vorhergehenden Ansprüche, wobei die Lagerbuchse (10) temperaturbeständig bis zumindest 150°C ist.

11. Bauteilgruppe (2) nach einem der vorhergehenden Ansprüche, bei der es sich bei dem ersten Bauteil (4) um einen Schwenkhebel und bei dem zweiten Bauteil (6) um ein Seitenteil einer Struktur eines Fahrzeugsitzes handelt.

12. Verfahren zur Lackierung einer Bauteilgruppe (2) eines Fahrzeuges, insbesondere eines Fahrzeugsitzes, bei dem eine unlackierte Bauteilgruppe (2) bereitgestellt wird, die ein erstes Bauteil (4) und ein zweites Bauteil (6) aufweist, die aneinander um eine sich in einer Axialrichtung erstreckenden Drehachse drehbar befestigt sind, wobei das erste Bauteil (4) ein Lagerloch (8) aufweist, in dem eine gegossene Lagerbuchse (10) einliegt, welche durch teilweises Umgießen des ersten Bauteils (4) ausgebildet ist, und die beiden Bauteile (4, 6) über einen durch die Lagerbuchse (10) geführten Lagerbolzen (18) verbunden sind, wobei die Lagerbuchse (10) aus Kunststoff mit darin enthaltenen leitfähigen Beimengungen ausgebildet ist, derart, dass über die Lagerbuchse (10) und den darin geführten Lagerbolzen (18) eine leitfähige Verbindung zwischen den beiden Bauteilen (4, 6) ausgebildet ist, wobei zum Aufbringen einer Lackschicht die unlackierte Bauteilgruppe (2) mittels einer kathodischen Tauchlackierung lackiert wird.

13. Verfahren nach dem vorhergehenden Anspruch, bei dem die unlackierte Bauteilgruppe (2) zur Durchführung der kathodischen Tauchlackierung nur an einem der beiden Bauteile (4, 6) elektrisch kontaktiert wird.

## Claims

1. Component group (2) for a vehicle, in particular for a vehicle seat, having a first component (4) and a second component (6) which are fastened to one another so as to be rotatable about an axis of rotation (D) extending in an axial direction (A), wherein the first component (4) has a bearing hole (8) in which a bearing bushing (10) formed by partially casting around the first component (4) is cast, and the two components (4, 6) are connected via a bearing bolt (18) guided through the bearing bushing (10), wherein the bearing bushing (10) is formed from plastic, with conductive additives contained therein, in such a way that a conductive connection is formed between the two components (4, 6) via the bearing bushing (10) and the bearing bolts (18) guided therein, and wherein a layer of paint is applied to the component group (2) by means of cathodic dip coating.

2. Component group (2) according to the preceding claim, wherein the bearing bushing (10) has at least one radially extending bushing edge (12), by means of which the bearing bushing (10) engages around a hole edge of the bearing hole (8), and wherein the bearing bolt (18) has a collar (20), by means of which it rests on the bushing edge (12).

3. Component group (2) according to either of the preceding claims, wherein the bearing bushing (10) engages around the hole edge in the axial direction (A) on both sides with a radially extending bushing edge (12).

4. Component group (2) according to one of the preceding claims, wherein in particular knob-like protrusions (30) are formed on the bushing edge (12), against which protrusions the collar (20) is pressed.

5. Component group (2) according to one of the preceding claims, in which the bearing bushing (10) has a cast skin at least in regions in which there is no contact with the bearing bolt (18).

6. Component group (2) according to one of the preceding claims, which component group is painted, wherein the bearing bushing (10) is free from paint.

7. Component group (2) according to one of the preceding claims, wherein the first component (4) has a further bearing hole (22) in which a further cast bearing bushing (10) is formed by partially casting around the first component (4), wherein the further bearing bushing (10) is also formed from plastic, with conductive additives contained therein, wherein the further bearing bushing (10) is preferably free from paint.

8. Component group (2) according to one of the preceding claims, wherein the additives are conductive fibres, in particular carbon fibres.

9. Component group (2) according to one of the preceding claims, wherein the proportion of additives is in the range between 10% by volume and 60% by volume and in particular in the range between 10% by volume and 40% by volume.

10. Component group (2) according to one of the preceding claims, wherein the bearing bushing (10) is temperature-resistant up to at least 150°C.

11. Component group (2) according to one of the preceding claims, wherein the first component (4) is a pivot lever and the second component (6) is a side part of a structure of a vehicle seat.

12. Method for painting a component group (2) of a vehicle, in particular a vehicle seat, in which an unpainted component group (2) is provided which has a first component (4) and a second component (6) which are fastened to one another so as to be rotatable about an axis of rotation extending in an axial direction, wherein the first component (4) has a bearing hole (8) in which a cast bearing bushing (10) formed by partially casting around the first component (4) lies, and the two components (4, 6) are connected via a bearing bolt (18) guided through the bearing bushing (10), wherein the bearing bushing (10) is formed from plastic, with conductive additives contained therein, in such a way that a conductive connection is formed between the two components (4, 6) via the bearing bushing (10) and the bearing bolts (18) guided therein, wherein, in order to apply a layer of paint, the unpainted component group (2) is painted by means of cathodic dip coating.

13. Method according to the preceding claim, in which the unpainted component group (2) is electrically contacted only on one of the two components (4, 6) in order to carry out the cathodic dip coating.

## Revendications

1. Groupe de composants (2) pour un véhicule, en particulier pour un siège de véhicule, comportant un premier composant (4) et un second composant (6) qui sont fixés l'un à l'autre de manière rotative autour d'un axe de rotation (D) s'étendant dans une direction axiale (A), dans lequel le premier composant (4) présente un trou de palier (8) dans lequel est moulée une douille de palier (10), laquelle est réalisée par surmoulage partiel du premier composant (4), et les deux composants (4, 6) sont reliés par l'intermédiaire d'un boulon de palier (18) guidé à travers la douille de palier (10), dans lequel la douille de palier (10) est réalisée en matière plastique contenant des adjuvants conducteurs, de telle sorte que, par le biais de la douille de palier (10) et du boulon de palier (2) guidé dans celle-ci, une liaison conductrice est réalisée entre les deux composants (4, 6), et dans lequel une couche de peinture est appliquée sur le groupe de composants (18) par peinture par immersion cathodique.

2. Groupe de composants (2) selon la revendication précédente, dans lequel la douille de palier (10) présente au moins un bord de douille (12) s'étendant radialement, par lequel la douille de palier (10) vient en prise autour d'un bord de trou du trou de palier (8), et dans lequel le boulon de palier (18) présente un collet (20) par lequel il repose sur le bord de douille (12).

3. Groupe de composants (2) selon l'une quelconque des revendications précédentes, dans lequel la douille de palier (10) vient en prise autour du bord de trou dans la direction axiale (A) des deux côtés par un bord de douille (12) s'étendant radialement.

4. Groupe de composants (2) selon l'une quelconque des revendications précédentes, dans lequel des rehaussements (30) en particulier en forme de bosses sont réalisés sur le bord de douille (12), rehaussements contre lesquels le collet (20) est pressé.

5. Groupe de composants (2) selon l'une quelconque des revendications précédentes, dans lequel la douille de palier (10) présente une peau de moulage au moins dans des régions dans lesquelles il n'y a pas aucun contact avec le boulon de palier (18).

6. Groupe de composants (2) selon l'une quelconque des revendications précédentes, qui est peint, dans lequel la douille de palier (10) est dépourvue de peinture.

7. Groupe de composants (2) selon l'une quelconque des revendications précédentes, dans lequel le premier composant (4) présente un autre trou de palier (22) dans lequel une autre douille de palier moulée (10) est réalisée par surmoulage partiel du premier composant (4), dans lequel l'autre douille de palier (10) est également réalisée en matière plastique contenant des adjuvants conducteurs, dans lequel l'autre douille de palier (10) est de préférence dépourvue de peinture.

8. Groupe de composants (2) selon l'une quelconque des revendications précédentes, dans lequel les adjuvants sont des fibres conductrices, en particulier des fibres de carbone.

9. Groupe de composants (2) selon l'une quelconque des revendications précédentes, dans lequel la proportion d'adjuvants est comprise entre 10 % en volume et 60 % en volume et en particulier comprise entre 10 % en volume et 40 % en volume.

10. Groupe de composants (2) selon l'une quelconque des revendications précédentes, dans lequel la douille de palier (10) résiste à la température jusqu'à au moins 150 °C.

11. Groupe de composants (2) selon l'une quelconque des revendications précédentes, dans lequel le premier composant (4) est un levier pivotant et le second composant (6) est une partie latérale d'une structure d'un siège de véhicule.

12. Procédé de peinture d'un groupe de composants (2) d'un véhicule, en particulier d'un siège de véhicule, dans lequel un groupe de composants (2) non peint est fourni, lequel présente un premier composant (4) et un second composant (6) qui sont fixés l'un à l'autre de manière rotative autour d'un axe de rotation s'étendant dans une direction axiale, dans lequel le premier composant (4) présente un trou de palier (8) dans lequel une douille de palier (10) moulée est logée, laquelle est réalisée par surmoulage partiel du premier composant (4), et les deux composants (4, 6) sont reliés par l'intermédiaire d'un boulon de palier (18) guidé à travers la douille de palier (10), dans lequel la douille de palier (10) est réalisée en matière plastique contenant des adjuvants conducteurs, de telle sorte que, par le biais de la douille de palier (10) et du boulon de palier (2) guidé dans celle-ci, une liaison conductrice est réalisée entre les deux composants (4, 6), dans lequel, pour appliquer une couche de peinture, le groupe de composants (18) non peint est peint par peinture par immersion cathodique.

13. Procédé selon la revendication précédente, dans lequel le groupe de composants (2) non peint n'est mis en contact électrique qu'au niveau de l'un des deux composants (4, 6) pour effectuer la peinture par immersion cathodique.
